# EUROPEAN PATENT APPLICATION

(11) **EP 4 629 265 A1**
(43) Date of publication of application: **08.10.2025**
(21) Application number: 23896463.9
(22) Date of filing: 07.11.2023
(51) Int. Cl.: H01B 7/08, H01B 7/18, H01B 7/40, B60R 16/02

(54) **LAYERED HARDENED WIRING HARNESS AND VEHICLE**

(30) Priority: 28.11.2022 CN 202211497186
(71) Applicant: Changzhou Jetty Automotive Parts Corporation, Changzhou, Jiangsu 213100 (CN)
(72) Inventor: WANG, Chao, hangzhou, Jiangsu 213100 (CN)
(74) Representative: Habermann, Hruschka & Schnabel
(86) International application number: PCT/CN2023/130067
(87) International publication number: WO 2024/114311

(57) **Abstract**

Disclosed by the present disclosure are a layered hardened wire harness and a vehicle. In the present disclosure, a flat wire for transmitting a power signal and a flat cable for transmitting a data signal are stacked in a protective groove, and by using the flat wire and the flat cable to replace the existing power lines and a part of data lines; meanwhile, a protective cover is provided on the tops of the flat cable and the flat wire, and a buffer layer is arranged in at least one position among the following four positions: between the flat cable and the flat wire which are adjacent to each other, between the flat wires which are adjacent to each other, between the flat cables which are adjacent to each other, and between the flat cable and the crimping member which are adjacent to each other, so as to prevent a functional cable from damaging the flat cable and the flat wire during assembly and use, thereby ensuring the stability of signal transmission.

## Description

### RELATED APPLICATION

The present disclosure claims priority of Chinese patent application NO. 202211497186.7, filed on November 28, 2022, the disclosure of which is hereby incorporated by reference in its entirety.

### TECHNICAL FIELD

The present disclosure relates to the field of automotive design and manufacturing, and particularly to a layered hardened wire harness and a vehicle.

### BACKGROUND

An automotive wire harness is a network main body of an automotive circuit and constitutes blood vessels and nerves connecting an automotive electrical system. The automotive wire harness should not only ensure the good transmission of electrical signals, but also guarantee the reliability of a connection circuit.

At present, most of the traditional automotive wire harnesses are formed by bundling wires one by one. Given that there are numerous circuits and branches of automotive wires, problems such as messy wire harnesses and complex products arise. Moreover, the weight is the large and the cost is high. With the increasing complexity of automotive functions, the length and the weight of the automotive wire harness have further increased. In particular, the diameter of a main harness trunk tends to increase significantly, occupying a large interior space in the vehicle. Meanwhile, the existing wire harnesses also have difficulty in adapting to the automated assembly, and are mostly produced manually, so there is also a problem of a low production efficiency.

### SUMMARY

In view of the above content, the present disclosure aims to provide a layered hardened wire harness and a vehicle, so as to solve the technical problems mentioned in the background art.

In order to achieve the above objective, the present disclosure adopts the following technical solution: a layered hardened wire harness, including a protective groove that accommodates a wire harness, the wire harness being at least partially disposed in the protective groove, wherein the wire harness includes:

at least one flat wire, and at least one flat cable that includes a plurality of core wires, the flat cable and the flat wire being stacked in the protective groove.

In some embodiments, the layered hardened wire harness further includes at least one functional cable distributed on the tops of the flat cable and the flat wire.

In some embodiments, a protective cover is provided on the tops of the flat cable and the flat wire, and the functional cable is distributed on the top of the protective cover.

In some embodiments, at least one cable fixing member for fixing the functional cable is fixedly provided on the top of the protective cover.

In some embodiments, the protective cover is an elastic cap-shaped structure, two ends of which are correspondingly provided with at least one group of clips, an inner wall of the protective groove is provided with a slideway fitted with the at least one group of clips, and a tail end of the slideway is provided with a locking slot matched with the clips; after sliding into the protective groove along the slideway, the clips on the protective cover are finally clamped in the locking slot.

In some embodiments, a width of the flat cable is smaller than that of the flat wire, and the flat cable is located above the flat wire.

In some embodiments, the protective cover is conformally provided on the tops of the flat cable and the flat wire.

In some embodiments, the protective groove is composed of a plurality of housing units arranged in sequence, and each housing unit is provided with at least one connecting lug plate for fixing the housing unit.

In some embodiments, two ends of each housing unit are respectively provided with a positioning notch and a positioning flange fitted with each other, and the adjacent housing units are spliced through the positioning notch and the positioning flange.

In some embodiments, the housing unit has a cross-section shaped as a U-shaped groove.

In some embodiments, the plurality of housing units are arranged along a route of the wire harness, and an upper cover is detachably snapped on the top of the housing unit.

In some embodiments, the flat cable and the flat wire are correspondingly provided with a plurality of fixing holes; an inner side of a bottom of the protective groove is provided with a plurality of fixing members which pass through the fixing holes formed on the flat cable and the flat wire to fix the flat cable and the flat wire, and the flat cable and the flat wire are fixed on the fixing members through the fixing holes.

In some embodiments, the fixing member includes a fixing portion connected to an inner wall of the housing unit and a connecting portion connected to the fixing portion; the connecting portion is a guiding head which is integrated with the fixing portion, and the guiding head is circumferentially provided with a plurality of notches penetrating through a sidewall thereof.

In some embodiments, the fixing portion is a columnar structure matched with the shape of the fixing hole.

In some embodiments, the fixing member further includes a crimping member, which is provided with a crimping hole matched with the guiding head, and when the crimping hole of the crimping member passes through the guiding head, the guiding head is compressed to guide the crimping member to be clamped inside.

In some embodiments, a buffer layer is arranged in at least one position among the following four positions including: between the flat cable and the flat wire which are adjacent to each other, between the flat wires which are adjacent to each other, between the flat cables which are adjacent to each other, and between the flat cable and the crimping member which are adjacent to each other, and the buffer layer is provided with through holes matched with the fixing members.

In some embodiments, an insulation layer wraps an outer wall of the flat wire, and a shielding sleeve is disposed to sleeve over the outside of the insulation layer.

In some embodiments, the flat wire is a flat aluminum wire, and the flat cable is an FPC/FFC cable.

The present disclosure further provides a vehicle, including the aforementioned hardened wire harness.

As compared with the prior art, the present disclosure has the following advantageous effects:
1. In the present disclosure, a flat wire for transmitting a power signal and a flat cable for transmitting a data signal are stacked in a protective groove, and by using the flat wire and the flat cable to replace the existing power lines and a part of data lines, the diameter of an existing automotive wire harness at a main trunk section can be significantly decreased, and the volume and the weight of the automotive wire harness can be effectively reduced.
2. In the present disclosure, a protective cover is provided on the tops of the flat cable and the flat wire, so as to prevent the functional cable from damaging the flat cable and the flat wire during assembly and use; and a buffer layer is arranged in at least one position among the following four positions: between the flat cable and the flat wire which are adjacent to each other, between the flat wires which are adjacent to each other, between the flat cables which are adjacent to each other, and between the flat cable and the crimping member which are adjacent to each other, so as to further prevent the flat cable and the flat wire from being damaged when the crimping member is mounted, thereby ensuring the stability of signal transmission.
3. In the present disclosure, the flat cable and the flat wire are correspondingly provided with a plurality of fixing holes; an inner side of a bottom of the protective groove is provided with a plurality of fixing members which pass through the fixing holes formed on the flat cable and the flat wire to fix the flat cable and the flat wire, and then the flat cable and the flat wire are fixed on the fixing members through the fixing holes; the functional cable is distributed on the top of the flat cable, so as to adapt to the automated assembly of the wire harness; thus, compared with the existing manual assembly, the production efficiency is greatly improved.
4. In the present disclosure, the protective groove is employed to protect and solidify the internal cables to achieve the hardening of the wire harness; moreover, the protective groove is composed of a plurality of housing units arranged in sequence; the housing units can be spliced according to a route and application requirements of the wire harness, so that the housing units have a strong applicability and can be applied to most positions of the complete vehicle.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a structural diagram of a layered hardened wire harness of the present disclosure;
FIG. 2 illustrates a structural diagram of a protective cover in the hardened wire harness illustrated in FIG. 1;
FIG. 3 illustrates a schematic diagram of the distribution of a slideway and a locking slot on a protective groove;
FIG. 4 illustrates a structural diagram of a single housing unit;
FIG. 5 illustrates a top view of a single housing unit;
FIG. 6 illustrates a schematic diagram of the splicing of adj acent housing units;
FIG. 7 illustrates a structural diagram of a fixing member in the hardened wire harness illustrated in FIG. 1; and
FIG. 8 illustrates a schematic diagram of the distribution of fixing holes on a flat cable/flat wire.

Reference numerals:
10: protective groove; 11: connecting lug plate; 12: functional cable; 13: fixing hole;
101: slideway; 102: locking slot;
20: housing unit; 201: positioning notch; 202: positioning flange;
30: protective cover; 301: cable fixing member; 302: clip;
40: fixing member; 401: fixing portion; 402: connecting portion; 4021: guiding head; 4022: notch; 403: crimping member; 4031: crimping hole;
50: upper cover;
60: flat cable;
70: flat wire; 701: shielding sleeve;
80: buffer layer.

### Detailed Description of the Embodiments

Various exemplary embodiments of the present disclosure will now be described in detail with reference to the drawings. It should be noted that unless otherwise specifically stated, the relative arrangements of components and steps, numerical expressions and values set forth in these embodiments do not limit the scope of the present disclosure.

The following description of at least one exemplary embodiment is actually illustrative only and in no way serves as any limitation to the present disclosure and the application or the use thereof.

Techniques, methods, and devices that are known to those of ordinary skill in the related art may not be discussed in detail. However, where appropriate, said techniques, methods, and devices should be regarded as part of the specification.

In all the examples shown and discussed herein, any specific value should be construed as merely exemplary rather than a limitation. Therefore, other examples of the exemplary embodiments may have different values.

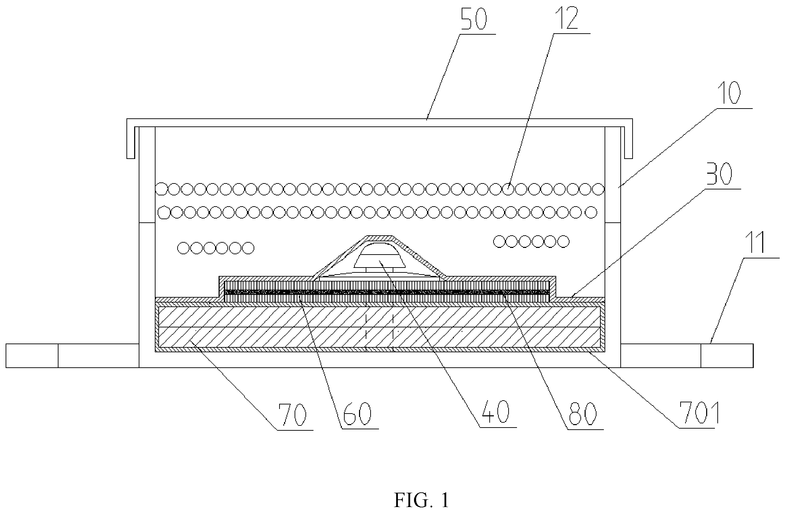

A layered hardened wire harness, as illustrated in FIG. 1, includes a protective groove 10 that accommodates a wire harness, the protective groove 10 being configured to protect and solidify the internal cables to achieve the hardening of the wire harness; the wire harness is at least partially disposed in the protective groove 10, and the wire harness includes: at least one flat wire 70 configured to transmit a power signal and at least one flat cable 60 which includes a plurality of core wires and is configured to transmit a data signal, the flat cable 60 and the flat wire 70 being stacked in the protective groove 10; the wire harness further includes at least one functional cable 12 configured to transmit a special signal and distributed on the tops of the flat cable 60 and the flat wire 70. By using the flat wire 70 and the flat cable 60 to replace the existing power lines and a part of data lines, the present disclosure can significantly decrease the diameter of the existing automotive wire harness at a main trunk section, and can effectively reduce the volume and the weight of the wire harness of the whole vehicle.

In an embodiment, the flat wire 70 is a flat aluminum wire, and the flat cable 60 is an FPC/FFC cable (here may be an FPC cable). In order to prevent an electromagnetic signal of the flat wire 70 from interfering with a signal inside the flat cable 60, an insulation layer (not illustrated) may be extrusion-coated to wrap an outer wall of the flat wire 70, and a shielding sleeve 701 is disposed to sleeve the insulation layer. It should be noted here that the flat aluminum wire itself is an existing technical solution in the art, which is prepared by making a traditional wire into a flat sheet shape. In the present disclosure, the flat aluminum wire configured to transmit the power signal is attached and fixed to a bottom of the protective groove 10, so that the space of the wire harness in the protective groove 10 can be saved compared with the round wires, thereby reducing the volume of the entire wire harness.

The thickness of a single layer of the FPC cable is only 0.2 mm. Meanwhile, the FPC cable with a width of 50 mm can accommodate approximately 35 circuits. Compared with the functional cable 12, the FPC cable can greatly save the volume and the weight of the wire harness. Meanwhile, FPC cables can be stacked in multiple layers, which can further save the layout space of the wire harness when being widely used. According to statistics, compared with ordinary cables with the same circuit, the FPC cable can save about 80% of the space and reduce 70% of the weight.

The functional cable 12 mainly includes ordinary cable and HSD/FAKRA/Ethernet cable. The ordinary cable mainly refer to circuit where the FPC cable cannot be used, such as twisted-pairs, shielded cables, and some types of power cables. The HSD/FAKRA/Ethernet cables are mainly used to transmit differential signals, radio frequency signals, etc., and such signal circuits likewise cannot be replaced by the FPC cables.

In an embodiment, as illustrated in FIG. 1, a protective cover 30 is provided on the tops of the flat cable 60 and the flat wire 70, and the functional cable 12 is distributed on the top of the protective cover 30. The protective cover 30 can be provided to prevent the functional cable from damaging the flat cable 60 and the flat wire 70 during assembly and use, thereby protecting both the flat cable 60 and the flat wire 70.

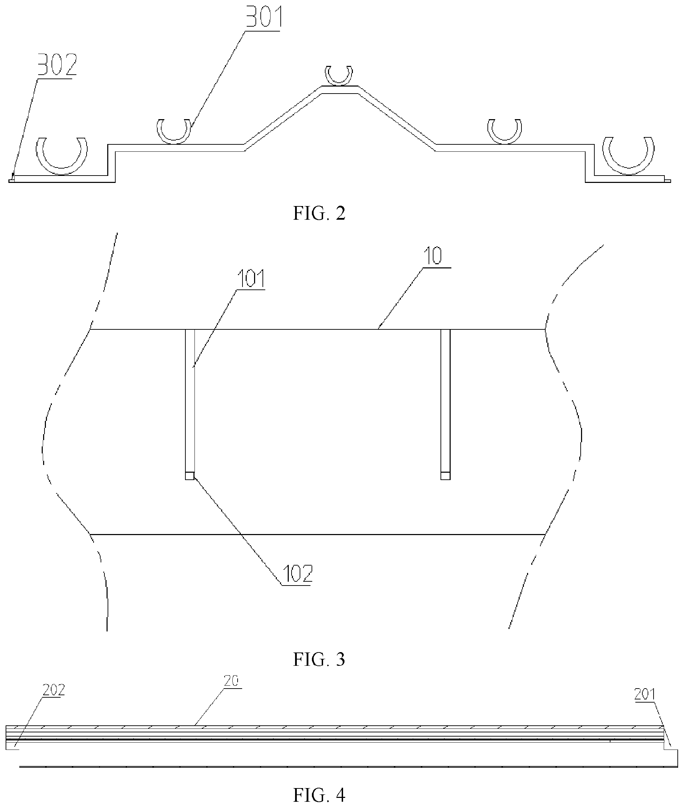

Further, as illustrated in FIGS. 2 and 3, the protective cover 30 is an elastic cap-shaped structure, two ends of which are correspondingly provided with at least one group of clips 302, an inner wall of the protective groove 10 is provided with a slideway 101 fitted with the at least one group of clips 302, a tail end of the slideway 101 is provided with a locking slot 102 matched with the clips 302, and after sliding into the protective groove 10 along the slideway 101, the clips 302 on the protective cover 30 are finally locked in the locking slot 102, to realize the mounting of the protective cover 30.

In this embodiment, a width of the flat cable 60 is smaller than that of the flat wire 70, and the flat cable 60 is located above the flat wire 70. Correspondingly, the protective cover 30 is conformally arranged on the tops of the flat cable 60 and the flat wire 70. As illustrated in FIG. 1, the protective cover 30 has a shape varied with the shapes of the flat wire 70 and the flat cable 60, and is attached outside the flat wire 70 and the flat cable 60. On one hand, the internal space of the protective groove 10 is saved, so that more functional cables 12 can be accommodated. On the other hand, the stability is strong, and the protective cover 30 is prevented from shaking during the operation of the vehicle and affecting the flat cable 60 and the flat wire 70 provided inside.

In an embodiment, as illustrated in FIG. 2, at least one cable fixing member 301 for fixing the functional cable 12 is provided on the top of the protective cover 30. The cable fixing member 301 is generally a U-shaped clip that facilitates the fixation and the detachment of the cable, and may be provided as plural. When there are few functional cables to be fixed in the protective groove 10, the functional cables 12 may be directly fixed by the plurality of clips to prevent the functional cable 12 from shaking left and right in the protective groove 10. To achieve the best use effect, different clips may have different inner diameters, so that the cables of different diameters can be fixed.

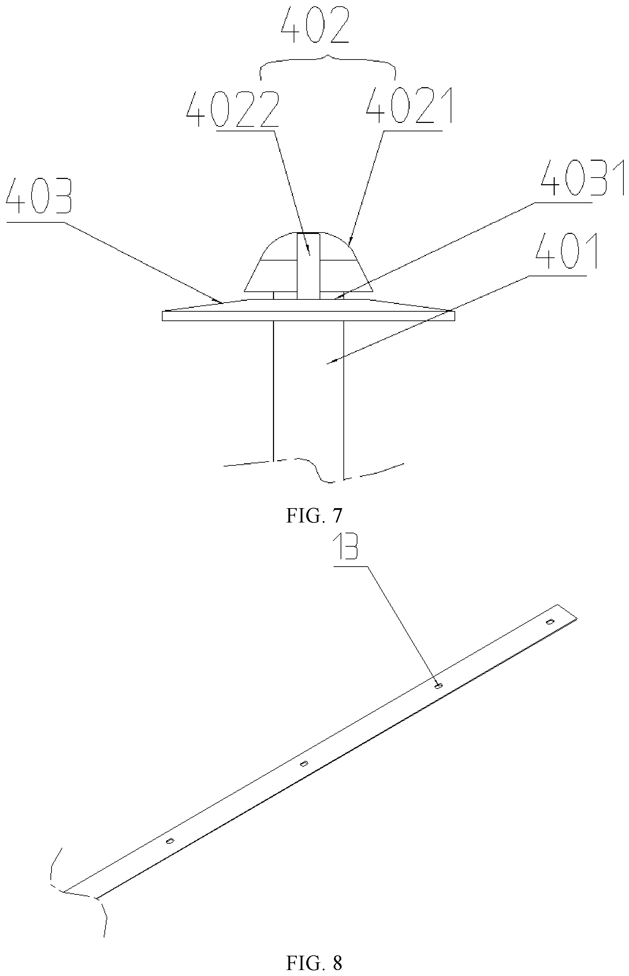

In an embodiment, the flat cable 60 and the flat wire 70 are correspondingly provided with a plurality of fixing holes 13. A distribution diagram of the fixing holes 13 on the flat cable 60/the flat wire 70 is illustrated in FIG. 8, in which different fixing holes 13 may be arranged at intervals and distributed on a same straight line. Correspondingly, as illustrated in FIGS. 1 and 8, an inner side of a bottom of the protective groove 10 is provided with a plurality of fixing members 40, the fixing members 40 pass through the fixing holes 13 formed on the flat cable 60 and the flat wire 70, and the fixing members 40 fix the flat cable 60 and the flat wire 70, and the flat cable 60 and the flat wire 70 are fixed on the fixing members 40 through the fixing holes 13. Meanwhile, as mentioned above, the protective cover 30 and the protective groove 10 are mounted through the clip 302 and the slideway 101 which are fitted with each other, so that the hardened wire harness of the present disclosure can adapt to the automated assembly of the wire harness, and compared with the existing manual assembly, the production efficiency is greatly improved.

The fixing member provided in this embodiment is illustrated in FIG. 7, and specifically, includes a fixing portion 401 connected to an inner wall of the housing unit 20 and a connecting portion 402 connected to the fixing portion 401.

The fixing portion 401 is a columnar structure matched with the shape of the fixing hole 13. The connecting portion 402 includes a guiding head 4021 which is integrated with the fixing portion 401, so as to form a mushroom shape as a whole. The guiding head 4021 is circumferentially provided with a plurality of notches 4022 penetrating through a sidewall thereof. The fixing member 40 further includes a crimping member 403, which is provided with a crimping hole 4031 matched with the guiding head 4021. When the crimping hole 4031 of the crimping member 403 passes through the guiding head 4021, the guiding head 4021 is compressed to guide the crimping member 403 to be latched inside.

In order to reduce the resistance when the crimping member 403 passes through the guiding head 4021, the plurality of notches 4022 are provided. However, in order to ensure that the guiding head 4021 has a good strength and an excellent recovery capability, the notches 4022 may be provided as two, which are symmetrically provided on the guiding head 4021. Those skilled in the art should know that, in order to achieve the above objective, an inner diameter of the crimping hole 4031 should be smaller than a maximum outer diameter of the guiding head 4021 in a natural state, and larger than a maximum outer diameter of the guiding head 4021 under an external force.

In addition, the crimping member 403 has an elastic disc-shaped structure. When the crimping member 403 passes through the guiding head 4021, it is necessary to continuously press the crimping member 403, causing the crimping member 403 to undergo a slight deformation along an axial direction and finally be clamped inside the guiding head 4021. At this time, the crimping member 403 abuts against the flat wire 70 and the flat cable 60, in which the flat wire 70 and the flat cable 60 are mounted outside the fixing portion 401, thereby increasing a contact area between the crimping member 403 and the flat wire 70, and between the crimping member 403 and the flat cable 60, and enhancing the fixing effect. It should be noted here that the fixing portion 401, i.e., the columnar structure, should have a height matched with the overall thickness of the flat aluminum wire and the FPC cable, so that the mounted crimping member 403 can abut against the flat wire 70 and the flat cable 60 mounted outside the fixing portion 401.

Further, a buffer layer 80 is arranged in at least one position among the following four positions: between the flat cable 60 and the flat wire 70 which are adjacent to each other, between the flat wires 70 which are adjacent to each other, between the flat cables 60 which are adjacent to each other, and between the flat cable 60 and the crimping member 403 which are adjacent to each other, and the buffer layer 80 is provided with through holes (not illustrated) matched with the fixing members 40. The buffer layer 80 may be made of a soft material deformable under an external force, such as a rubber pad or sponge, and may be arranged in all of the four positions. The buffer layer 80 can further prevent the flat cable 60 and the flat wire 70 from being damaged when the crimping member 403 is mounted, thereby ensuring the stability of signal transmission.

In an embodiment, the protective groove 10 is composed of a plurality of housing units 20 arranged in sequence. An upper cover 50 is detachably snapped on the top of the housing units 20, so as to facilitate the assembly and subsequent maintenance.

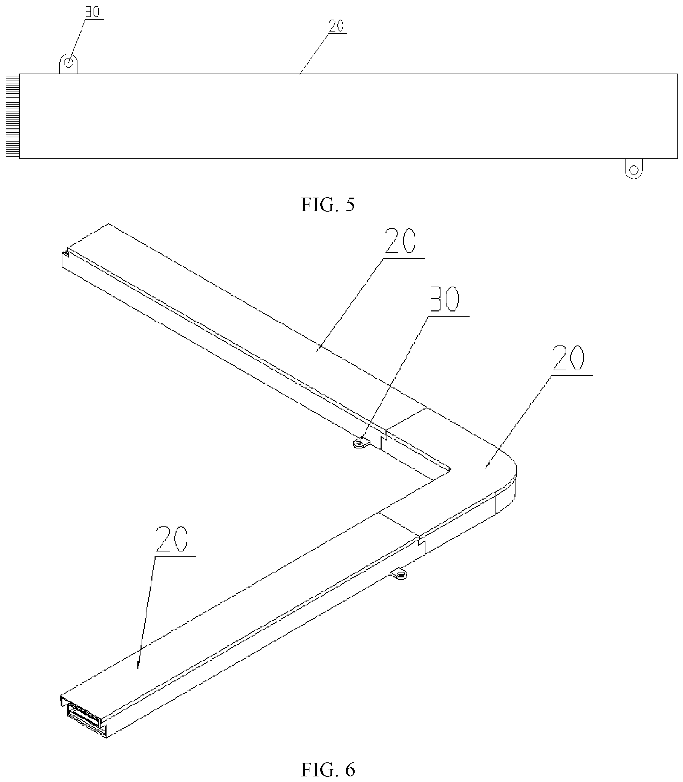

FIGS. 4 and 5 are structural diagrams of a single housing unit. As illustrated in FIGS. 4 and 5, each housing unit 20 is provided with at least one connecting lug plate 11 for fixing the housing unit 20. The connecting lug plate 11 is provided with a threaded hole and connected to a vehicle body through a connecting member such as a screw. It should be noted here that, in order to achieve the best protection effect for the wire harness, the plurality of housing units 20 may be continuously spliced. However, considering the convenience of maintenance and the cost issue, the plurality of housing units 20 may also be arranged discontinuously, so as to expose a part of the wire harness.

Further, the plurality of housing units 20 are arranged along a route of the wire harness. Those skilled in the art can splice the plurality of housing units 20 according to the route and application requirements of the wire harness. In order to achieve the best use effect, the housing unit 20 may be set as a deformable structure that can be bent along with the shape of a vehicle shell and mounted to match the corresponding position of the vehicle shell. Thus, the housing unit 20 has a strong applicability and can be applied to most positions of the complete vehicle.

As illustrated in FIGS. 1 and 4, the housing unit 20 has a cross-section shaped as a U-shaped groove. Two ends of each housing unit 20 are respectively provided with a positioning notch 201 and a positioning flange 202 fitted with each other, and the adjacent housing units 20 are spliced through the positioning notch 201 and the positioning flange 202. FIG. 6 illustrates a schematic diagram of the splicing of the adjacent housing units. It should be noted here that the positioning notch 201 and the positioning flange 202 are only used to realize the splicing between the adjacent housing units 20. The specific fixation is still realized through the connecting lug plate 11.

The automated assembly process in the present disclosure is as follows:
according to the route and requirements of the wire harness, the housing units 20 are pre-spliced to form the protective groove 10, and then the fixing holes 13 are correspondingly formed on the flat wire 70 and the flat cable 60;
automated equipment such as a manipulator is employed to successively grasp the flat wire 70 and the flat cable 60 formed with the holes as well as the buffer layer 80, and cause the flat wire 70 and the flat cable 60 to be pressed down and disposed outside the fixing portion 401; next, the automated equipment grasps the crimping member 403 to fix the flat wire 70 and the flat cable 60 together;
automated equipment such as a manipulator is employed to grasp the protective cover 30, and make the clips 302 on the protective cover 30 slide into the protective groove 10 along the slideway 101 and finally be latched in the locking slot 102;
automated equipment such as a manipulator is employed to grasp and place the functional cable 12 into the protective groove 10, so that the functional cable 12 is randomly distributed on the top of the protective cover 30 under its own gravity; and
automated equipment such as a manipulator is employed to grasp the upper cover 50 and make the upper cover 50 snap on the top of the housing unit 20, thereby completing the automated assembly of the hardened wire harness.

The present disclosure further provides a vehicle, which includes the aforementioned hardened wire harness.

Although some specific embodiments of the present disclosure have been described in detail by way of examples, those skilled in the art should understand that the above examples are only for illustration and are not intended to limit the scope of the present disclosure. It should be understood by those skilled in the art that the above embodiments can be modified without departing from the scope and the spirit of the present disclosure, and the scope of the present disclosure is defined by the appended claims.

## Claims

1. A layered hardened wire harness, comprising a protective groove that accommodates a wire harness, the wire harness being at least partially disposed in the protective groove, wherein the wire harness comprises:
at least one flat wire, and at least one flat cable that comprises a plurality of core wires, the flat cable and the flat wire being stacked in the protective groove.

2. The layered hardened wire harness according to claim 1, further comprising at least one functional cable distributed on the tops of the flat cable and the flat wire.

3. The layered hardened wire harness according to claim 2, wherein a protective cover is provided on the tops of the flat cable and the flat wire, and the functional cable is distributed on the top of the protective cover.

4. The layered hardened wire harness according to claim 3, wherein at least one cable fixing member for fixing the functional cable is fixedly provided on the top of the protective cover.

5. The layered hardened wire harness according to claim 3, wherein the protective cover is an elastic cap-shaped structure, two ends of which are correspondingly provided with at least one group of clips, an inner wall of the protective groove is provided with a slideway fitted with the at least one group of clips, and a tail end of the slideway is provided with a locking slot matched with the clips; after sliding into the protective groove along the slideway, the clips on the protective cover are finally latched in the locking slot.

6. The layered hardened wire harness according to claim 5, wherein a width of the flat cable is smaller than that of the flat wire, and the flat cable is located above the flat wire.

7. The layered hardened wire harness according to claim 6, wherein the protective cover is conformally arranged on the tops of the flat cable and the flat wire.

8. The layered hardened wire harness according to claim 1, wherein the protective groove is composed of a plurality of housing units arranged in sequence, and each housing unit is provided with at least one connecting lug plate for fixing the housing unit.

9. The layered hardened wire harness according to claim 8, wherein two ends of each housing unit are respectively provided with a positioning notch and a positioning flange fitted with each other, and the adjacent housing units are spliced through the positioning notch and the positioning flange.

10. The layered hardened wire harness according to claim 8, wherein the housing unit has a cross-section shaped as a U-shaped groove.

11. The layered hardened wire harness according to claim 8, wherein the plurality of housing units are arranged along a route of the wire harness, and an upper cover is detachably snapped on the top of the housing unit.

12. The layered hardened wire harness according to claim 1, wherein the flat cable and the flat wire are correspondingly provided with a plurality of fixing holes; an inner side of a bottom of the protective groove is provided with a plurality of fixing members which pass through the fixing holes formed on the flat cable and the flat wire to fix the flat cable and the flat wire, and the flat cable and the flat wire are fixed on the fixing members through the fixing holes.

13. The layered hardened wire harness according to claim 12, wherein the fixing member comprises a fixing portion connected to an inner wall of the housing unit and a connecting portion connected to the fixing portion;
the connecting portion is a guiding head which is integrated with the fixing portion, and the guiding head is circumferentially provided with a plurality of notches penetrating through a sidewall thereof.

14. The layered hardened wire harness according to claim 13, wherein the fixing portion is a columnar structure matched with the shape of the fixing hole.

15. The layered hardened wire harness according to claim 13, wherein the fixing member further comprises a crimping member, which is provided with a crimping hole matched with the guiding head, and when the crimping hole of the crimping member passes through the guiding head, the guiding head is compressed to guide the crimping member to be latched inside.

16. The layered hardened wire harness according to claim 15, wherein a buffer layer is arranged in at least one position among the following four positions: between the flat cable and the flat wire which are adjacent to each other, between the flat wires which are adjacent to each other, between the flat cables which are adjacent to each other, and between the flat cable and the crimping member which are adjacent to each other; and the buffer layer is provided with through holes matched with the fixing members.

17. The layered hardened wire harness according to claim 1, wherein an insulation layer wraps an outer wall of the flat wire, and a shielding sleeve is disposed to sleeve over the outside of the insulation layer.

18. The layered hardened wire harness according to claim 1, wherein the flat wire is a flat aluminum wire, and the flat cable is an FPC/FFC cable.

19. A vehicle, comprising the hardened wire harness according to any of claims 1 to 18.
